# FASCICULE DE BREVET EUROPEEN

(11) **EP 1 231 050 B1**
(45) Date de publication et mention de la délivrance du brevet: **09.11.2005**
(21) Numéro de dépôt: 02001862.8
(22) Date de dépôt: 28.01.2002
(51) Int. Cl.: B29D 30/16, B29D 30/70

(54) **Appareil à bras oscillant, pour la fabrication d'un renfort de pneumatique à partir d'un fil**
Vorrichtung mit Schwingarm zur Herstellung einer Luftreifenverstärkung aus einem Draht
Swing arm apparatus for manufacturing a tyre reinforcing structure using a single thread

(30) Priorité: 07.02.2001 FR 0101748
(43) Date de publication de la demande: 14.08.2002
(60) Demande divisionnaire: 05002379.5
(73) Titulaire: Société de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: Mayet, Jean-Claude, 63000 Clermont-Ferrand (FR)
(74) Mandataire: Bauvir, Jacques

(56) Documents cités:
- EP-A- 0 962 304
- EP-A- 1 122 055
- GB-A- 179 312

## Description

La présente invention concerne la fabrication des pneumatiques. Plus précisément, elle se rapporte à la mise en place de fils pour constituer un renforcement du pneumatique. Plus particulièrement, elle propose des moyens aptes à fabriquer un tel renforcement sur une forme proche ou identique de la forme de la cavité interne du pneumatique, c'est à dire une forme sensiblement toroïdale, supportant l'ébauche d'un pneumatique pendant sa fabrication.

Dans ce domaine technique, on connaît déjà des procédés et appareils qui permettent d'intégrer la fabrication des renforcements de pneumatique à l'assemblage du pneumatique lui-même. Cela signifie que, plutôt que de recourir à des produits semi-finis, comme des nappes de renforcement, on réalise un ou des renforcements in situ, au moment où l'on fabrique le pneumatique, et à partir d'une seule bobine de fil. Parmi ces procédés et appareils, la solution décrite dans la demande de brevet EP 0 580 055 est tout particulièrement adaptée pour la réalisation de renforcements de carcasse sur un noyau rigide dont la surface extérieure correspond sensiblement à la forme de la cavité interne du pneumatique final. On y voit un appareillage dans lequel le fil, destiné à constituer un renforcement de carcasse, est posé en arceaux contigus sur un noyau rigide, par un oeilleton fixé sur une chaîne montée sur des poulies de façon à entourer le noyau en formant une sorte de « C ». L'oeilleton effectué un mouvement de va-et-vient autour du noyau de façon à poser, progressivement et de façon contiguë, un arceau à chaque aller et un arceau à chaque retour, avec intervention de presseurs appropriés pour appliquer les extrémités desdits arceaux au fur et à mesure sur le noyau rigide, pré-revêtu de caoutchouc cru.

Par la demande de brevet EP 0 962 304, on connaît un appareil prévu lui aussi pour la réalisation de renforcements de carcasse sur un noyau rigide dont la surface extérieure correspond sensiblement à la forme de la cavité interne du pneumatique final. Dans une première variante, on y voit un bras oscillant unique dont l'extrémité, supportant un organe de guidage comparable à l'oeilleton évoqué ci-dessus, décrit nécessairement des arcs de cercle. On peut se reporter à la figure 3 de ladite demande de brevet EP 0 962 304. Le problème qui se pose est que si l'on souhaite fonctionner à des cadences de pose rapides, il convient que l'amplitude des angles et rayons caractéristiques de l'arc de cercle décrit ne soit pas trop importante. Il convient aussi que les extrémités de l'arc de cercle ne soient pas trop éloignées du bourrelet, c'est à dire de la zone effective de dépose du fil. Dans le cas contraire, il en résulterait un travail plus difficile des organes presseurs et/ou une plus grande imprécision de dépose du fil. Si l'on éloigne vers les plus grands rayons l'axe géométrique de rotation du bras oscillant le bras peut contourner le noyau sans le heurter. Cela favorise la précision de dépose mais alors l'arc de cercle décrit devient beaucoup plus grand (tant en angle qu'en rayon) et il est plus difficile de fonctionner à cadence élevée. En résumé, les paramètres de fonctionnement importants sont la position du centre de rotation du bras oscillant, l'angle balayé, le rayon du bras, et la garde que le bras doit présenter par rapport à la forme sur tout son long et en toute position spatiale fonctionnelle.

Dans une seconde variante de ladite demande de brevet EP 0 962 304, on voit un système à came et bras multiples articulés, oscillants, l'extrémité supportant un organe de guidage, comparable à l'oeilleton évoqué ci-dessus, et qui cette fois est maintenu en contact permanent avec le noyau. On peut se reporter à la figure 5 de ladite demande de brevet EP 0 962 304. Le problème qui se pose est qu'un tel dispositif comporte beaucoup de frottements, et qu'il risque de provoquer des désordres notamment dans les produits en caoutchouc cru déjà déposés à la surface du noyau, d'autant plus importants que l'on chercherait à fonctionner à cadence élevée.

L'objectif de la présente invention est de proposer des appareillages capables de fonctionner selon le procédé général décrit dans la demande de brevet EP 0 580 055 précitée, et capables de fonctionner à des cadences importantes sans préjudice de la précision de fonctionnement.

L'invention propose un appareil de fabrication d'un renforcement pour pneumatique, ledit appareil étant destiné à fabriquer un renforcement constitué à partir d'un fil délivré sensiblement en continu et à la demande par un distributeur approprié, ledit appareil étant destiné à être utilisé en coopération avec une forme sensiblement toroïdale sur laquelle on construit progressivement ledit renforcement en déposant des arceaux dudit fil selon une trajectoire souhaitée pour ledit fil à la surface de ladite forme, ledit appareil étant destiné à être utilisé en coopération avec des presseurs proches de chaque extrémité de ladite trajectoire, pour appliquer le fil sur la forme auxdites extrémités, ledit appareil comprenant un organe de guidage dans lequel le fil peut coulisser librement, un système à bras oscillant ayant au moins un premier bras oscillant autour d'un axe géométrique de rotation ledit bras oscillant comportant une tête éloignée de son axe géométrique de rotation, des moyens de commande pour conférer audit bras oscillant un mouvement d'oscillation autour de son axe géométrique de rotation, l'appareil étant agencé pour que la tête dudit premier bras transporte l'organe de guidage directement, ou indirectement par l'intermédiaire d'un ou plusieurs autres bras oscillants,
caractérisé en ce que
l'axe géométrique de rotation dudit premier bras coupe la forme en position de travail, et la distance entre l'organe de guidage et l'axe géométrique de rotation dudit bras est variable.

L'invention propose également un procédé de fabrication d'un pneumatique selon la revendication 19.

Le lecteur est invité à consulter la demande de brevet EP 0 580 055 précitée car la présente invention reprend non seulement le procédé qui y est décrit, mais aussi dans une large mesure les presseurs intervenant pour permettre la formation d'une boucle et pour appliquer ladite boucle contre le noyau. Pour rappel, les presseurs comprennent essentiellement chacun une fourche et un marteau. A quelques détails près, l'exemple de réalisation des presseurs qui y est décrit pourrait être repris tel quel, même si l'on propose ci-dessous une nouvelle forme pour lesdits presseurs.

C'est concernant l'animation de l'organe de guidage dans lequel le fil peut coulisser librement (à savoir l'oeilleton), que l'invention apporte les principales différences. Autrement dit, les systèmes à bras oscillants décrits ci-dessous sont conçus pour pouvoir prendre la place du système à chaîne décrit dans la demande de brevet EP 0 580 055 précitée.

Avant d'aborder en détails la description de ces nouveaux moyens d'animation de l'organe de guidage du fil, rappelons quelques points utiles à la parfaite compréhension de l'invention.

Notons tout d'abord que, comme dans le brevet cité, le terme "fil" doit bien entendu être compris dans un sens tout à fait général, englobant un monofilament, un multifilament, un assemblage comme par exemple un câble ou un retors, ou un petit nombre de câbles ou retors groupés, et ceci quelle que soit la nature du matériau, et que le "fil" soit pré revêtu de caoutchouc ou non. Dans le présent mémoire, on emploie le terme "arceau" pour désigner un tronçon de fil allant d'un point singulier à un autre dans l'armature de renforcement. L'ensemble de ces arceaux disposés sur tout le pourtour du pneumatique forme le renforcement proprement dit. Un arceau au sens défini ici peut faire partie d'une carcasse, ou d'un renfort de sommet, ou de tout autre type de renforcement. Ces arceaux peuvent être individualisés par une coupe du fil en cours de pose, ou tous reliés entre eux dans le renforcement final, par exemple par des boucles.

Fondamentalement, l'invention traite de la dépose en continu d'un fil de renforcement, dans une configuration aussi proche que possible de la configuration dans le produit final. Le fil étant délivré à la demande par un distributeur approprié comportant par exemple une bobine de fil et le cas échéant un dispositif de contrôle de la tension du fil extrait de la bobine, l'appareil de fabrication d'un renfort à partir d'un seul fil coopère avec une forme (noyau rigide ou une membrane) sur laquelle on fabrique le pneumatique. Il importe peu que le renforcement soit, pour être complet, fabriqué en plusieurs rotations successives de la forme, avec coupe du fil ou non entre deux rotations.

Lorsque l'on définit des positions, des directions ou des sens avec les mots "radialement, axialement, circonférentiellement", ou lorsque l'on parle de rayons, on prend pour repère le noyau sur lequel on fabrique le pneumatique, ou le pneumatique par lui-même. L'axe géométrique de référence est l'axe de rotation de la forme.

De même, comme déjà signalé dans la demande de brevet EP 0 580 055 précitée, les organes de pose du fil décrits ici permettent aussi de réaliser un renforcement, par exemple un renforcement de carcasse, dans lequel le pas de pose du fil est variable. On entend par "pas de pose" la distance résultant de la somme de l'écart entre deux fils adjacents et le diamètre du fil. Il est bien connu que pour un renforcement de carcasse, l'écart entre fils varie selon le rayon auquel on le mesure. Il n'est pas question ici de cette variation, mais bien d'un pas variable à un rayon donné. Il suffit pour cela de, sans changer la cadence de travail de l'organe de guidage, faire varier selon toute loi appropriée la vitesse de rotation de la forme. On obtient ainsi un pneumatique dont les fils de renforcement de carcasse, par exemple pour une carcasse radiale, sont disposés selon un pas présentant une variation contrôlée pour une position radiale donnée.

Différents modes de réalisation de l'invention peuvent être envisagés. On verra que, chaque fois, l'appareil fait décrire à l'organe de guidage du fil un mouvement sensiblement compris dans un plan -le plan de mouvement- perpendiculaire à l'axe géométrique de rotation du premier bras. Le plan de mouvement étant éloigné dudit premier bras, et plus précisément de son arbre de rotation. L'appareil comporte des moyens de commande dudit bras oscillant, agencés pour conférer au bras oscillant un mouvement d'oscillation autour de son axe géométrique de rotation, l'appareil étant agencé pour que la tête dudit bras transporte l'organe de guidage selon un mouvement cyclique décrit dans un plan de mouvement, pour amener l'organe de guidage en cycles successifs au voisinage de chacune des extrémités souhaitées pour le fil dans ladite trajectoire.

Dans la suite et deux modes de réalisation, on décrit des dispositions dans lesquelles l'appareil comporte un deuxième bras oscillant autour d'un axe géométrique de rotation, lesdits axes géométriques de rotation étant sensiblement parallèles, ledit deuxième bras comportant une tête transportant l'organe de guidage directement, ou indirectement par l'intermédiaire d'un ou plusieurs autres bras, la tête du premier bras supportant l'axe géométrique de rotation du deuxième bras. Avantageusement, la tête du deuxième bras est radialement éloignée de l'axe géométrique de rotation du deuxième bras. Notons encore que dans ces modes de réalisation, l'appareil comporte de préférence des moyens de commande de la position relative du deuxième bras par rapport audit premier bras de sorte que l'organe de guidage est transporté selon un mouvement cyclique décrit dans le plan de mouvement, pour amener l'organe de guidage en cycles successifs au voisinage de chacune des extrémités souhaitées pour le fil dans ladite trajectoire.

De façon plus particulière et non limitative, la suite de la description des deux modes de réalisation évoqués ci-dessus montre que :
- la tête du deuxième bras est recourbée vers ladite forme, et supporte directement l'organe de guidage, de façon à rapprocher l'organe de guidage de ladite forme au moins dans la configuration prise par l'appareil lorsque l'organe de guidage est proche de l'extrémité de ladite trajectoire ;
- ledit premier bras est sensiblement orienté perpendiculairement à son axe géométrique de rotation, le deuxième bras ayant au moins une partie intermédiaire orientée sensiblement parallèlement à l'axe géométrique de rotation du premier bras.

Ces dispositions constructives s'avèrent avantageuses pour pouvoir présenter correctement l'organe de guidage du fil par dessus la forme, notamment aux extrémités de la trajectoire de dépose, sans qu'aucune partie des bras ne vienne heurter la forme pendant le mouvement de va et vient.

En outre, on décrit aussi dans la suite un mode de réalisation à bras unique coulissant, utilisé pour fabriquer un pneu pour système PAX, dont on sait que le bourrelet a une forme bien spécifique, qui rend inutile le fait que la tête du dernier bras, celui portant l'organe de guidage, soit recourbée vers ladite forme. Bien entendu, ce mode de réalisation peut aussi être utilisé pour fabriquer des pneus conventionnel, donc en particulier avec un bras recourbé vers ladite forme, et inversement, ceci étant dit une fois pour toutes.

La suite de la description permet de bien faire comprendre tous les aspects de l'invention, en s'appuyant sur les figures suivantes :
La figure 1 est une perspective montrant une première variante du premier mode de réalisation d'un appareil selon l'invention ;
La figure 2 est un détail d'un presseur de cet appareil ;
La figure 3 illustre un détail de ladite première variante selon le premier mode de réalisation ;
La figure 4 compare le fonctionnement de la première variante du premier mode à une réalisation à un seul bras ;
La figure 5 illustre un détail d'une seconde variante du premier mode de réalisation ;
La figure 6 compare le fonctionnement de la seconde variante du premier mode à une réalisation à un seul bras ;
La figure 7 est une perspective montrant les bras oscillants d'une première variante d'un deuxième mode de réalisation d'un appareil selon l'invention ;
La figure 8 illustre le fonctionnement de la première variante du deuxième mode de réalisation ; La figure 9 compare le fonctionnement de la première variante du deuxième mode de réalisation à une réalisation à un seul bras oscillant ;
La figure 10 est une perspective montrant les bras oscillants d'une deuxième variante du deuxième mode de réalisation d'un appareil selon l'invention ;
La figure 11 est une perspective montrant un troisième mode de réalisation d'un appareil selon l'invention ;
La figure 12 montre le fonctionnement du troisième mode de réalisation.

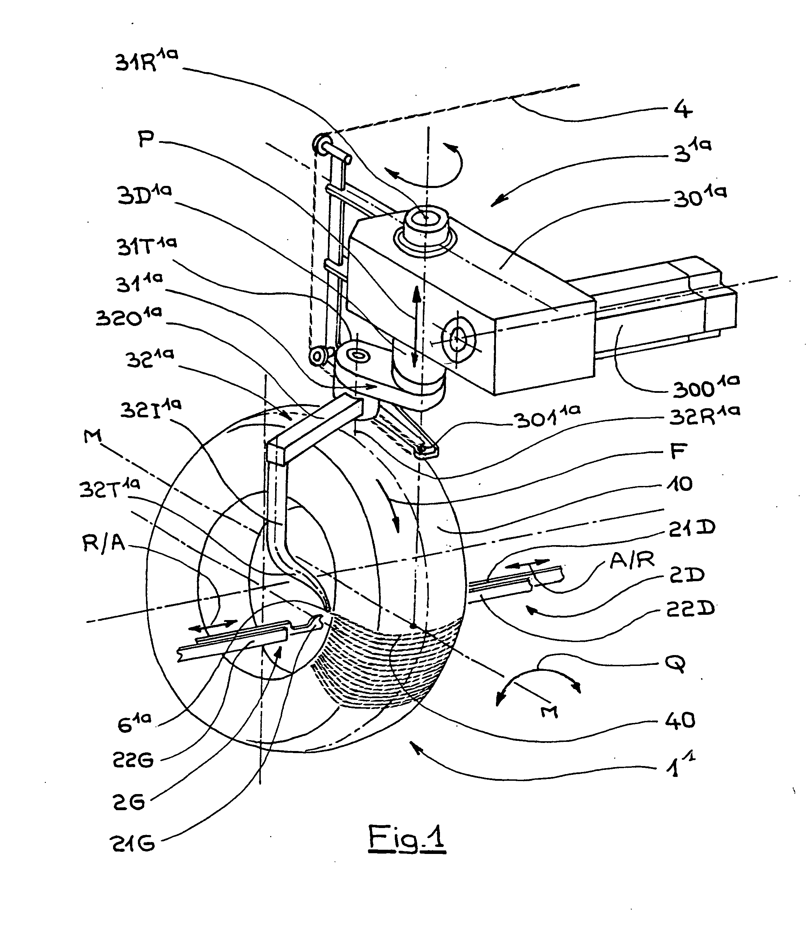

A la figure 1 (ainsi que d'ailleurs pour tous les exemples décrits, sans toutefois que ceci soit limitatif), on voit que la forme est un noyau ¹ (rigide et démontable) définissant la géométrie de la surface intérieure du pneumatique. Celui-ci est revêtu de caoutchouc 10, par exemple d'une couche de gomme d'étanchéité à base de caoutchouc butyl, et d'une couche de gomme assurant l'enrobage des fils de carcasse. Le caoutchouc 10 recouvrant le noyau 1 permet de retenir des arceaux 40 de fil 4 sur le noyau 1 au fur et à mesure de sa dépose, par un effet de collage. Bien entendu, le noyau 1 est entraîné en rotation par tout dispositif convenable, non représenté.

Les organes de pose proprement dits comportent essentiellement un système à bras oscillants 3^{1a} d'une part, et des dispositifs presseurs 2^{G} et 2^{D} d'autre part. Le système à bras oscillants 3^{1a} est monté sur un arbre oscillant 3D^{1a} dont on voit l'axe géométrique de rotation 31R^{1a}. L'axe géométrique de rotation 31R^{1a} coupe le noyau 1, en position de fonctionnement pour la pose de fil 4 sur le noyau. Un boîtier 30^{1a} comporte un dispositif mécanique de commande, approprié pour transformer le mouvement de rotation d'un moteur 300^{1a} en mouvement d'oscillations imprimées à l'arbre 3D^{1a}. Le système à bras oscillants 3^{1a} comporte un premier bras oscillant 31^{1a} et un deuxième bras oscillant 32^{1a}, agencés en cascade. Cet agencement à deux bras oscillants permet aisément de déplacer l'organe de guidage d'un bourrelet à l'autre, et donc d'obtenir, en conjonction avec les dispositifs presseurs 2^{G} et 2^{D}, une action de l'appareil d'un bourrelet à l'autre.

En ce qui concerne les références aux figures, la convention utilisée est de désigner des organes similaires par la même référence principale, par exemple « 3 » pour le système à bras oscillants, et de marquer l'appartenance spécifique à un mode de réalisation ou à une variante par une indication alphanumérique placée en exposant, par exemple « ^{1a} » pour le mode « 1 » (premier mode) de réalisation (utilisant une cascade de trois bras oscillants), dans sa variante « a ». Une référence sans marque spécifique renvoie à un organe toujours le même dans les différentes variantes ou doit être comprise comme désignant indifféremment toutes les variantes de tous les modes de réalisation.

De façon analogue, en ce qui concerne le noyau 1, la convention utilisée est de désigner un type particulier de forme par une indication alphanumérique placée en exposant, par exemple « 1¹ ». Une référence sans marque spécifique renvoie indistinctement à tout type de forme, ce qui est le cas général de la description, et contrairement aux dessins pour lesquels un choix d'illustration a été fait.

Le premier bras 31^{1a} est monté sur l'arbre oscillant 3D^{1a}. Le premier bras 31^{1a} comporte une tête 31T^{1a} à l'extrémité opposée à l'axe géométrique de rotation 31R^{1a}. Le deuxième bras 32^{1a}, articulé par un axe géométrique de rotation 32R^{1a} du deuxième bras, est monté sur la tête 31T^{1a} du premier bras 31^{1a}. Le deuxième bras 32^{1a} comporte une base 320^{1a}, orientée sensiblement perpendiculairement à l'axe géométrique de rotation 32R^{1a}. Ensuite, le deuxième bras 32^{1a} comporte une partie intermédiaire 32I^{1a} se développant sensiblement parallèlement à l'axe géométrique de rotation, en direction du plan de mouvement. Enfin, le deuxième bras 32^{1a} comporte une tête 32T^{1a}, à l'extrémité de laquelle on trouve un orifice 6^{1a}.

Une particularité très avantageuse de ce premier exemple (on la retrouve également dans tous les autres décrits ici, sans que ceci soit limitatif) concerne le guidage du fil 4. Tout d'abord, le fil 4 est amené jusqu'à un oeillet 301^{1a}, fixe dans l'espace, situé sensiblement sur l'axe géométrique de rotation 31R^{1a} du premier bras. Ensuite, le fil pénètre dans un orifice aménagé à la base du deuxième bras 32^{1a} et chemine à l'intérieur dudit deuxième bras, ledit deuxième bras étant creux. Enfin, au bout de la tête du deuxième bras, l'organe de guidage est constitué par un orifice 6^{1a} à l'extrémité du deuxième bras oscillant 32^{1a}. Cet orifice remplit la fonction remplie par l'oeilleton « 33 » dans la demande de brevet EP 0 580 055 précitée. Tous les exemples décrits se rapportent à des réalisations tout particulièrement avantageuses ne comportant que deux bras oscillants. Dès lors, la tête du deuxième bras oscillant transporte directement l'organe de guidage.

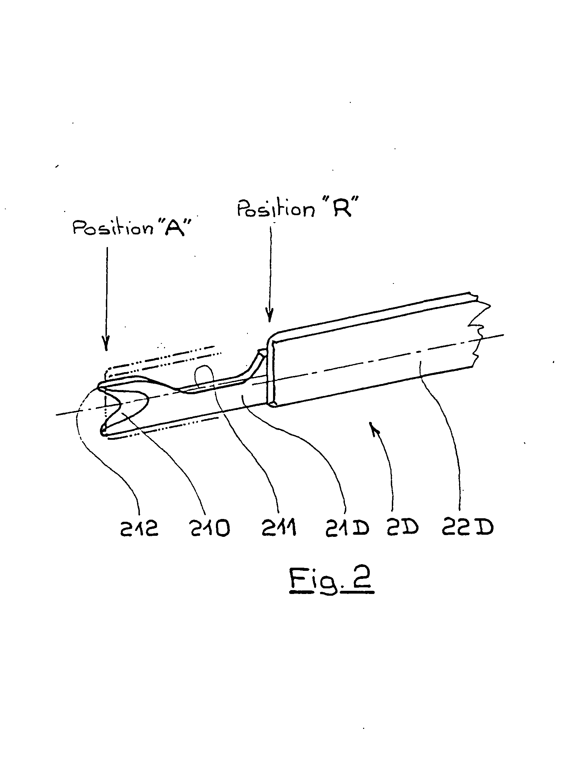

Avant d'aborder en détails la commande de tous les mouvements du système à bras oscillants 3^{1a}, revenons aux dispositifs presseurs 2^{G} et 2^{D} Ils doivent être positionnés de façon appropriée pour jouer le rôle décrit dans la demande de brevet EP 0 580 055 précitée. A la figure 2, on voit plus particulièrement le presseur 2^{D} qui comporte une fourche 21^{D} et un marteau 22^{D}, tous deux mobiles entre une position reculée, en R (position éloignée du noyau 1), et une position avancée, en A. On voit en trait discontinu le marteau en position avancée. En ce qui concerne les références aux figures, la convention utilisée est de désigner chacun des organes des presseurs par une référence principale, par exemple « 21 » pour la fourche, et de marquer l'appartenance spécifique au presseur d'un côté, le côté gauche ou le côté droit à la figure 1, par respectivement la lettre « ^{G} » ou « ^{D} » placée en exposant. Une référence sans marque spécifique renvoie de façon générique indifféremment à l'un ou l'autre des presseurs ou à leurs organes.

Le lecteur est à nouveau invité à consulter la partie adéquate de la description de la demande de brevet EP 0 580 055 précitée, pour un rappel des fonctions respectives de la fourche et du marteau 22, et pour un rappel des rôles respectifs des positions dites avancée A et reculée R. A la figure 2, on voit qu'aussi bien la fourche 21 que le marteau 22 ont l'allure de lames parallèles. La fourche 21 est, par rapport au marteau, toujours disposée radialement du côté de l'axe de rotation du noyau 1. Soulignons cependant que l'on peut adopter une disposition exactement inverse : le marteau 22 plus proche de l'axe de rotation que la fourche 21.

La fourche 21 a une tête 210 en « V », permettant de prendre et de centrer le fil 4. Pendant la phase de préhension, le plan formé par le « V » est disposé sensiblement perpendiculairement au fil 4. Lorsque le fil 4 doit être disposé radialement, cas de la figure 1, la lame formant la fourche 21 est orientée de façon tangente à un cercle concentrique au noyau 1. La fourche 21 comporte aussi un évidemment 211 dont le rôle apparaîtra ci-dessous.

La fourche 21 est destinée à emporter le fil 4 contre le noyau 1, puis à l'y maintenir. A cette fin, son avance vers le noyau 1 est déclenchée lorsque l'orifice 6 a amené le fil 4 à une extrémité du mouvement en va-et-vient, c'est à dire lorsque l'appareil est sensiblement dans la configuration de la figure 1. La fourche 21 est arrêtée lorsqu'elle a ancré le fil dans le caoutchouc revêtant le noyau 1. Ladite fourche 21 permet donc de plaquer le fil 4 avec une force suffisante pour qu'il adhère correctement à l'endroit souhaité.

Compte tenu du pas de pose souhaité, lui-même fonction du mouvement de rotation du noyau 1 schématisé par la flèche F, la poursuite du mouvement du système à bras oscillants 3 provoque la formation d'une boucle autour de la pointe 212, ce qui amorce la dépose d'un nouvel arceau 40 sur le noyau 1 (voir figure 1). Et le passage de l'orifice 6 au-delà de la fourche 21 en phase de retour est permis par l'évidemment 211, bien que la fourche 21 soit plaquée contre le noyau 1 dans cette phase de la fabrication. Signalons que la taille de la boucle est fonction de la dimension de la pointe 212.

Le marteau 22 intervient après la fourche 21 et après la phase dite de retour de l'orifice 6. Dans les exemples considérés, le marteau 22 appuie sur le fil 4 à une position radiale un peu plus élevée. De préférence, il retient encore le fil 4 pendant que l'on rétracte la fourche 21. Le maintien du marteau pendant que la fourche se rétracte aide à éviter que la fourche 21 n'emporte avec elle la boucle de fil 4 qui s'est formée autour d'une de ses pointes 212, et qui même si elle est collée sur le caoutchouc, pourrait avoir tendance à rester solidaire de la fourche. L'ancrage du fil 4 dans le bourrelet s'en trouve parfaitement fiabilisé.

Bien entendu, le mouvement en position avancée, et le retour en position reculée, aussi bien pour la fourche 21 que pour le marteau 22 (voir double flèches A/R et R/A à la figure 1), sont commandés en synchronisme avec le système à bras oscillants 3^{1a}, par tout dispositif convenable (renvoi de mouvement de l'arbre 3D par une transmission mécanique appropriée, par exemple à courroies ou à câble ou par synchronisation électrique entre plusieurs moteurs).

Le système à bras oscillants 3^{1a} fait décrire à l'orifice 6^{1a} un mouvement survolant le noyau 1, et même le contournant. Dans tous les cas de figure, le système à bras oscillants 3 fait parcourir à l'orifice 6 un mouvement dans un plan, le « plan de mouvement ». Il convient de soigner la réalisation des rebords de l'orifice 6 pour ne pas blesser le fil 4, car le brin de sortie de celui-ci se dispose généralement sensiblement dans le plan de mouvement, c'est à dire dans un plan qui est perpendiculaire à l'axe géométrique de rotation 31R^{1a}.

C'est donc au moyen de l'arbre oscillant 3D^{1a} que l'on imprime au système à bras oscillants les mouvements convenables. Ledit arbre oscillant 3D^{1a} n'effectue pas de rotation continue, mais oscille dans les limites d'un arc dont la valeur précise dépend de l'amplitude souhaitée pour le mouvement de l'orifice 6^{1a}. Le dispositif mécanique de commande, du genre à bielle et manivelle ou tout autre disposition convenable, est dessiné aisément en fonction d'un cahier des charges dépendant de l'application visée et est animé par un moteur 300^{1a}.

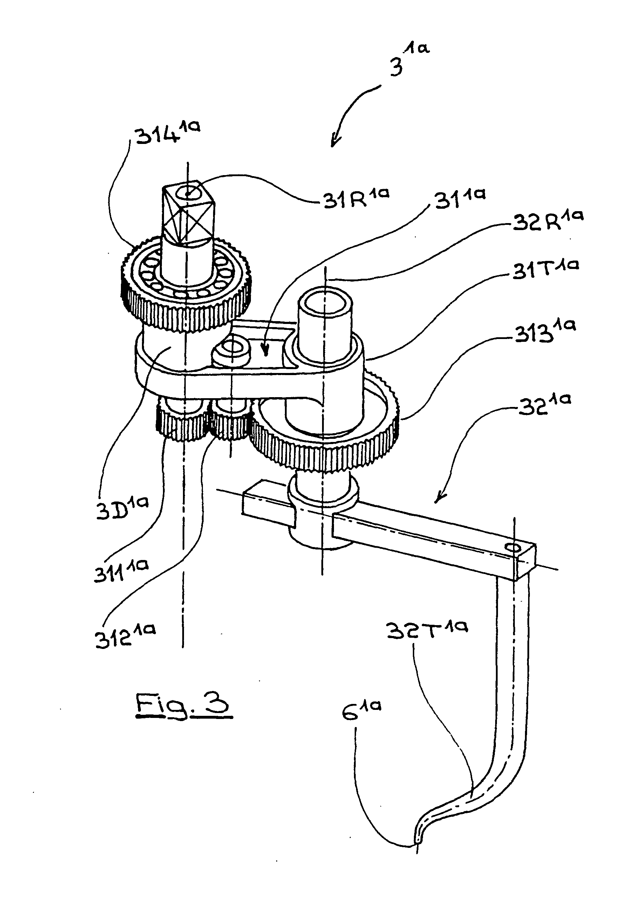

Afin de commander la position relative du deuxième bras 32^{1a} par rapport au premier bras 31^{1a}, le premier bras supporte une cascade de pignons (figure 3) ayant un premier pignon fixe 311^{1a} centré sur l'axe géométrique de rotation du premier bras, et un pignon d'extrémité 313^{1a} centré sur l'axe géométrique de rotation du deuxième bras et solidaire de celui-ci, et un pignon intermédiaire 312 engrenant avec le premier pignon et le pignon d'extrémité. Le premier pignon 311^{1a}, fixe, est solidaire du boîtier 30^{1a}. Les pignons 312^{1a} et 313^{1a} sont montés rotatifs sur le premier bras 31^{1a}. Le premier bras 31^{1a} est entraîné par un pignon menant 314^{1a}, lui même entraîné alternativement comme expliqué ci-dessus.

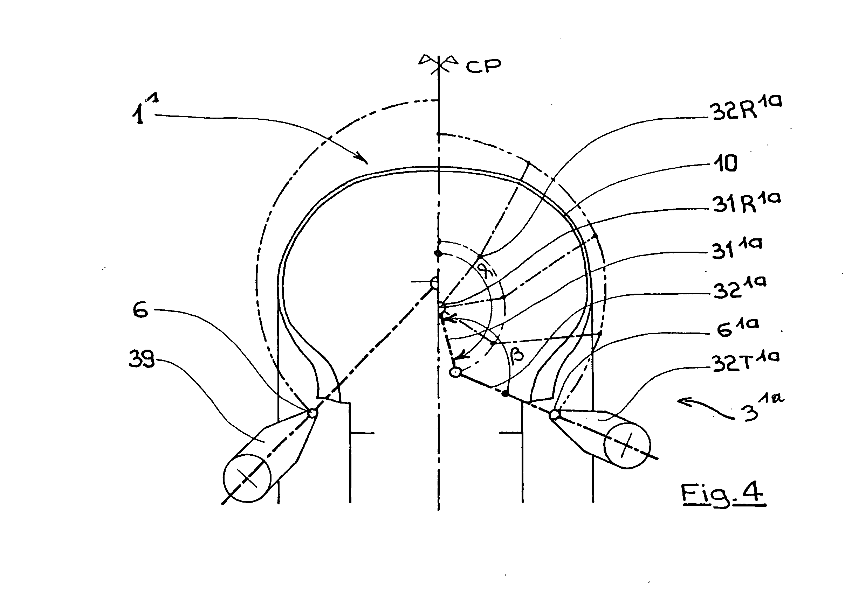

L'angle α (figure 4) représente la position instantanée du premier bras 31^{1a}. L'angle α varie sur une amplitude suffisante pour que le fil déposé atteigne les zones d'extrémité de trajectoire. Il convient que l'orifice 6 aille au delà de l'endroit où intervient le dispositif presseur 2. Dans la première variante illustrée aux figures 3 et 4, l'amplitude du mouvement angulaire du premier bras 31^{1α} est assez grande mais le premier bras est de faible longueur et donc de faible inertie. Le nombre de dents N_{f} du pignon fixe 311^{1a} est inférieur au nombre de dents Nₑ du pignon d'extrémité 313^{1a}, avec N_{f}= a Nₑ, le premier bras décrivant des oscillations d'amplitude α, α étant positif dans le sens trigonométrique inverse, le deuxième bras décrivant des oscillations d'amplitude β = 180°-aα autour de ladite forme, β étant positif dans le sens trigonométrique. Dans un exemple, on utilise une réduction de 12/18. L'amplitude du mouvement angulaire du deuxième bras oscillant 32^{1a} reste compatible avec des cadences élevées.

Sur la partie gauche de la figure 4, on a représenté un appareil à bras unique 39, alors que sur la partie droite de la même figure, on a représenté un appareil selon la première variante du premier mode de réalisation. On se rend compte que le noyau 1¹ est dessiné pour fabriquer des pneumatiques assez étroits. On compare des appareils conçus pour s'approcher tous les deux aussi prêt que possible de l'extrémité de la trajectoire d'un arceau de fil déposé sur le noyau. L'orifice 6, dans les deux cas, s'approche très prêt du bourrelet. Mais dans le cas de l'invention (partie droite de la figure), le système à bras oscillants nécessite bien moins d'espace libre autour du noyau, car il s'éloigne moins du noyau lorsqu'il survole la zone de la future bande de roulement.

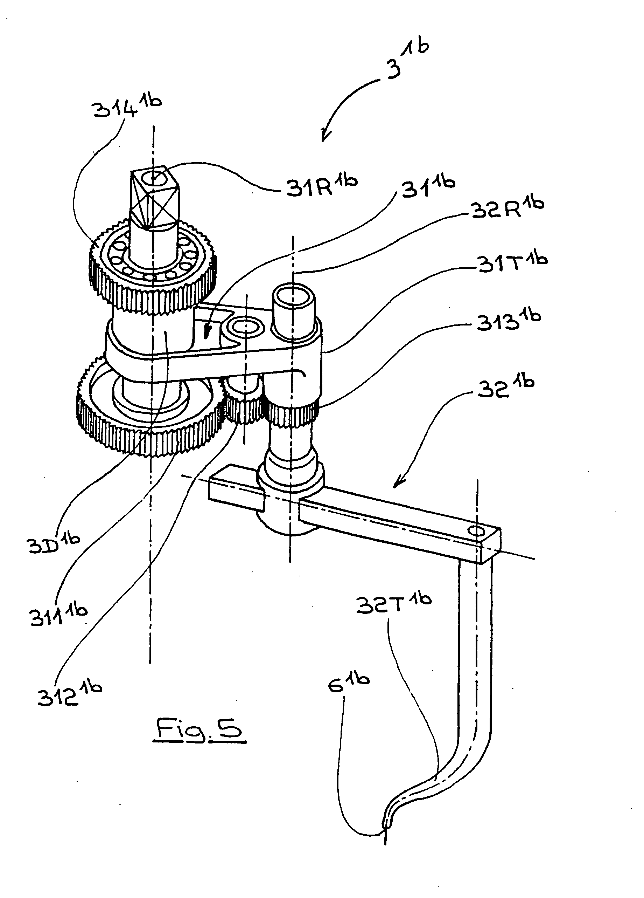

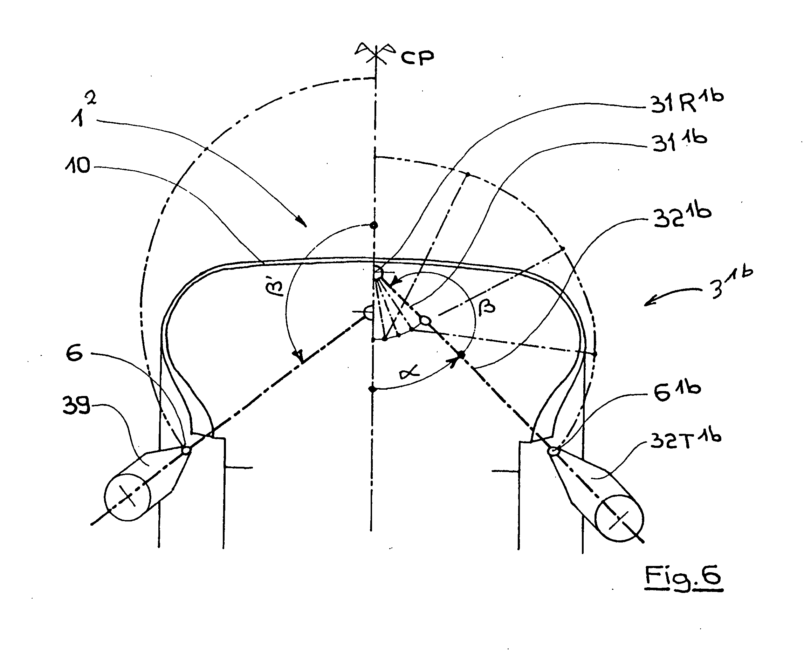

Comme on va le voir aux figures 5 et 6 dans une variante du premier mode, cet avantage est encore plus manifeste s'il faut fabriquer des pneumatiques très larges, ce que le noyau 1² montre bien, et ce qui est de plus en plus courant pour de nombreuses applications.

Remarquons que cette variante comporte aussi un premier bras 31^{1b}, un arbre oscillant 3D^{1b}, un axe géométrique de rotation 31R^{1b} du premier bras 31^{1b}, une tête 31T^{1b} à l'extrémité opposée à l'axe géométrique de rotation 31R^{1b}. Elle comporte aussi un deuxième bras 32^{1b}, ayant un axe géométrique de rotation 32R^{1b}, une tête 32T^{1b}, à l'extrémité de laquelle on trouve l'orifice 6^{1b}. On trouve aussi une cascade de trois pignons 311^{1b}, 312^{1b} et 313^{1b}. Le premier pignon 311^{1b} est fixe, solidaire d'un boîtier non représenté. Les pignons 312^{1b} et 313^{1b} sont montés rotatifs sur le premier bras 31^{1b}. Le premier bras 31^{1b} est entraîné par un pignon menant 314^{1b}, lui même entraîné alternativement comme expliqué ci-dessus.

Le nombre de dents N_{f} du pignon fixe 311^{1b} est supérieur au nombre de dents Nₑ du pignon d'extrémité 313^{1b}, avec N_{f}= a Nₑ, le premier bras décrivant des oscillations d'amplitude α dans l'espace du côté de son axe géométrique de rotation opposé à la forme, le deuxième bras décrivant des oscillations d'amplitude β = aα autour de ladite forme, α et β étant positifs dans le sens trigonométrique. Par exemple, on utilise une multiplication de 18/12. Vu la très faible amplitude du mouvement angulaire du premier bras 31^{1b}, l'amplitude du mouvement angulaire du deuxième bras oscillant 32^{1a} reste compatible avec des cadences élevées.

Sur la partie gauche de la figure 6, on a représenté un appareil à bras unique 39, alors que sur la partie droite de la même figure, on a représenté un appareil selon la deuxième variante du premier mode de réalisation. On se rend compte que le noyau 1 est dessiné pour fabriquer des pneumatiques larges. On compare des appareils conçus pour s'approcher tous les deux aussi prêt que possible de l'extrémité de la trajectoire d'un arceau de fil déposé sur le noyau. L'orifice 6, dans les deux cas, s'approche très prêt du bourrelet. A la figure 6, on compare encore des appareils conçus pour s'approcher tous les deux aussi prêt que possible de l'extrémité de la trajectoire d'un arceau de fil déposé sur le noyau. L'orifice 6, dans les deux cas, s'approche très prêt du bourrelet. Mais dans le cas de l'invention (partie droite de la figure), le système à bras oscillants nécessite considérablement moins d'espace libre autour du noyau. Dans un cas de ce genre, très courant en pratique, le bras unique 39 directement comparable en ce qui concerne la dépose du fil sur l'ébauche du futur bourrelet, s'éloignerait beaucoup du noyau lorsqu'il survole la zone de la future bande de roulement. Le système de l'invention présente aussi un gain important en inertie des parties en mouvement oscillatoire du système de dépose. La longueur, donc l'inertie des pièces en mouvement est plus faible pour la solution selon l'invention.

Même si, dans les exemples précédents comme dans les exemples suivants, l'orifice 6 décrit un mouvement dont le tracé est symétrique par rapport à ce plan médian, et atteint le voisinage de chacune des zones de bourrelet définies sur le noyau 1, dans un mouvement parfaitement symétrique, cela n'est pas limitatif. Il n'est pas exclu que les extrémités du mouvement de l'orifice ne soient pas en des points symétriques par rapport au plan médian, par exemple pour fabriquer un pneumatique dont la trajectoire des arceaux ne serait pas symétrique. Ce serait le cas pour fabriquer un pneumatique dont les diamètres au seat (terme usuel pour désigner le siège de montage) de chacun des bourrelets sont différents.

L'orifice 6 décrit un mouvement de va-et-vient d'un bourrelet à l'autre, ou plus précisément d'un endroit proche d'un bourrelet, à un endroit proche de l'autre bourrelet. Le cycle de base du fonctionnement des appareils selon l'invention comporte les étapes suivantes :
- le fil étant retenu contre la forme pendant un temps suffisant, déplacer l'orifice (organe de guidage) dans un plan de mouvement d'orifice jusqu'à une première extrémité,
- appliquer le fil sur la forme à cette première extrémité et l'y maintenir au moins un temps suffisant, au moyen d'un dispositif presseur,
- répéter la première étape en sens inverse jusqu'à une deuxième extrémité,
- appliquer le fil sur la forme à cette deuxième extrémité et l'y maintenir, au moyen d'un autre dispositif presseur,
et répéter ainsi ce cycle de base jusqu'à déposer le nombre voulu d'arceaux à la surface de la forme, selon la trajectoire souhaitée pour le fil 4 à la surface de la forme, en déplaçant la forme en synchronisme avec le mouvement de l'organe de guidage.

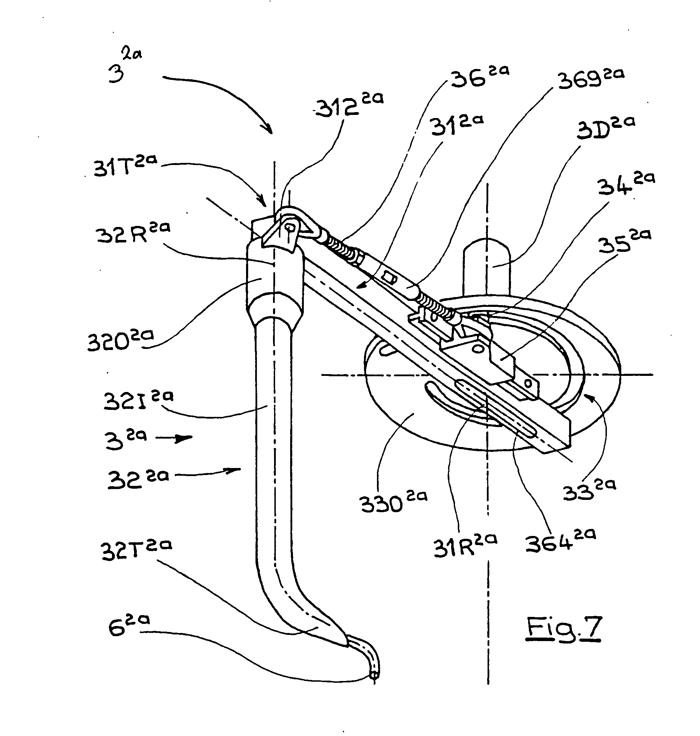

Passons maintenant à la première variante du deuxième mode de réalisation. La description qui suit s'appuie sur les figures 7 à 9. A la figure 7, on a représenté seulement un système à bras oscillants 3^{2a}, sans faire figurer la forme sur laquelle on dépose le fil ou le boîtier qui le supporte. On voit un premier bras 31^{2a}, monté sur un arbre oscillant 3D^{2a} ayant un axe géométrique de rotation 31R^{2a}. Le premier bras 31^{2a} comporte une tête 31T^{2a} à l'extrémité opposée à l'axe géométrique de rotation 31R^{2a}. Un deuxième bras 32^{2a}, est articulé par un axe géométrique de rotation 32R^{2a} du deuxième bras sur la tête 31T^{2a} du premier bras 31^{2a}. L'appareil comporte une came fixe 33^{2a} creusée dans un disque 330^{2a} centré sur l'axe géométrique de rotation du premier bras. Un suiveur de came 34^{2a} est en prise avec ladite came, le premier bras comportant un patin 35^{2a} dont le mouvement est commandé par le suiveur de came. Le deuxième bras comporte un levier 312^{2a} sensiblement perpendiculaire à son axe géométrique de rotation, l'extrémité dudit levier étant reliée par une biellette 36^{2a} au patin. Ceci permet de commander la position relative du deuxième bras 32^{2a} par rapport au premier bras 31^{2a}.

Le deuxième bras comporte une base 320^{2a} se développant sensiblement parallèlement à l'axe géométrique de rotation, et comporte une tête 32T^{2a} recourbée vers l'axe géométrique de rotation du premier bras 31^{2a}. A l'extrémité de la tête 32T^{2a}, on trouve un orifice 6^{2a}. Le deuxième bras 32^{2a} est conçu pour déporter l'orifice 6^{2a} jusqu'au plan de mouvement.

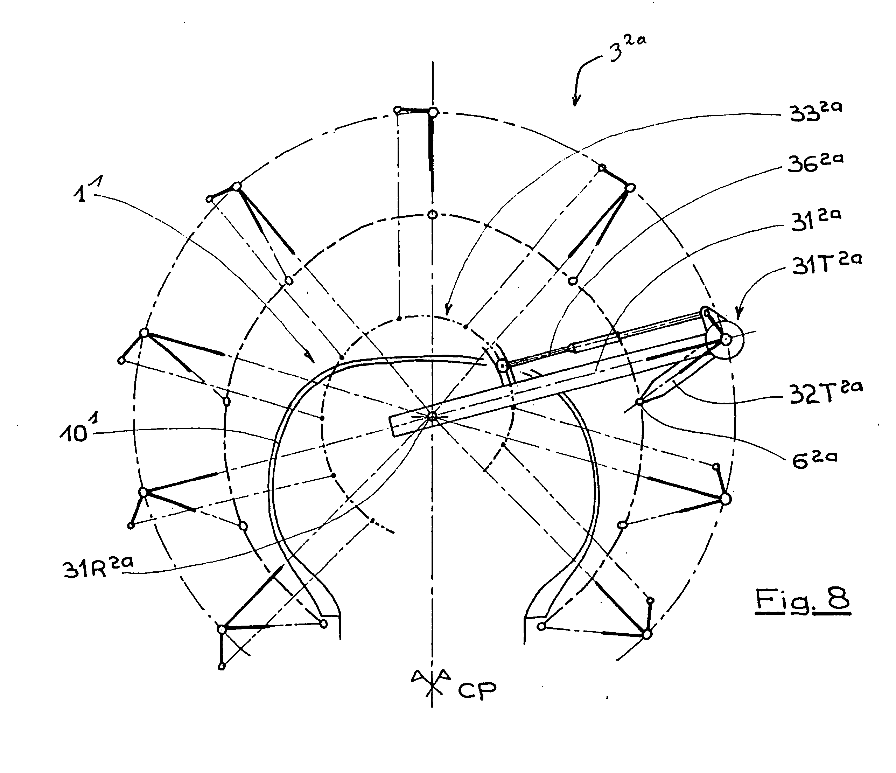

On voit à la figure 8 que, pour réaliser un mouvement et des configurations de l'ensemble des bras oscillants 3^{2a} qui soient symétriques par rapport au plan médian CP, le tracé de la came 33^{2a} n'est pas symétrique par rapport au plan CP, car d'un côté du plan CP, il faut basculer le deuxième bras 32^{2a} d'un côté du premier bras 31^{2a}, et de l'autre côté du plan CP, il faut basculer le deuxième bras 32^{2a} de l'autre côté du premier bras 31^{2a}.

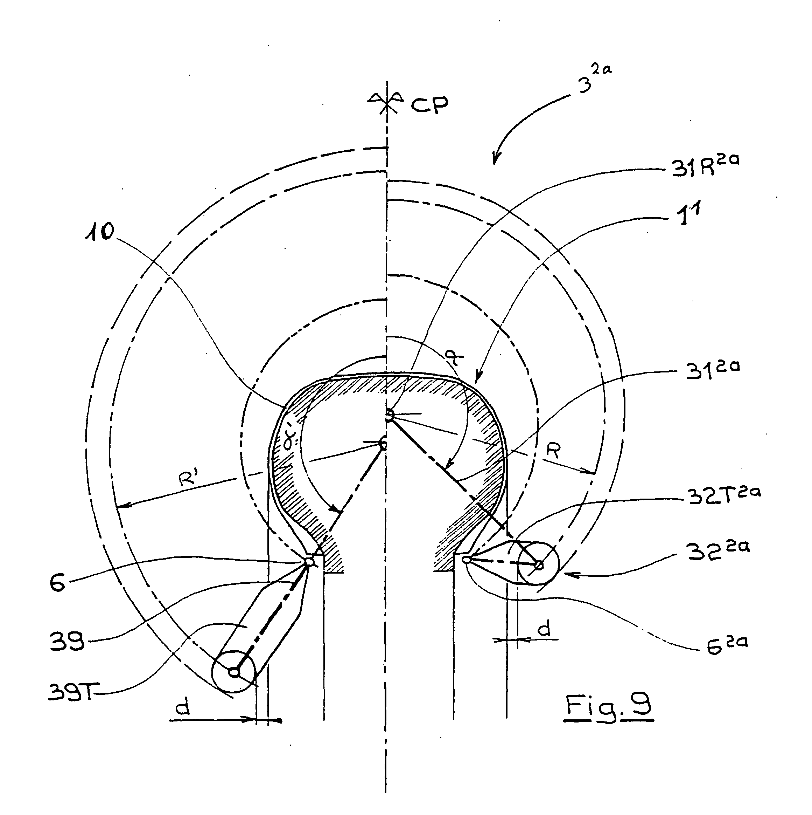

Sur la partie gauche de la figure 9, on a représenté un appareil à bras unique 39, alors que sur la partie droite de la même figure, on a représenté un appareil selon le deuxième mode de réalisation. On se rend compte que le noyau 1 est dessiné pour fabriquer des pneumatiques assez étroits. On compare des appareils conçus pour s'approcher tous les deux aussi prêt que possible de l'extrémité de la trajectoire d'un arceau de fil déposé sur le noyau. L'orifice 6, dans les deux cas, s'approche très prêt du bourrelet. On voit que, l'angle α' nécessaire à l'appareil de gauche pour atteindre le bourrelet sans que la partie intermédiaire ne touche la forme, depuis une position médiane sur le plan CP est plus grand que l'angle α de l'appareil de droite, conforme à l'invention. Parmi d'autres avantages, on peut mentionner que la longueur du premier bras 31^{2a} est plus faible que celle du bras 39. En outre, la longueur du bec final que forme la tête 32T^{2a} est bien plus faible que celle du bec 39T. Or la garde « d » existant entre la forme et le dispositif de pose est directement comparable. On voit donc tous les avantages de l'invention.

Grâce à la commande par came, le mouvement relatif entre deuxième bras et le premier bras peut être ajusté aux besoins assez librement puisqu'il dépend essentiellement du profil de la came. On est ainsi libéré de la contrainte de proportionnalité au mouvement rotatif relatif entre le premier et le deuxième bras, spécifique de la commande par pignons du premier mode de réalisation, ou la deuxième variante du deuxième mode. On peut imposer une position relative du deuxième bras par rapport au premier bras de façon à notamment faire dégager rapidement l'orifice 6 par rapport au noyau 1. On assure ainsi une garde « d » appropriée entre la tête 32T^{2a} et le noyau 1, en approchant suffisamment de la surface du noyau 1 dans la zone du bourrelet.

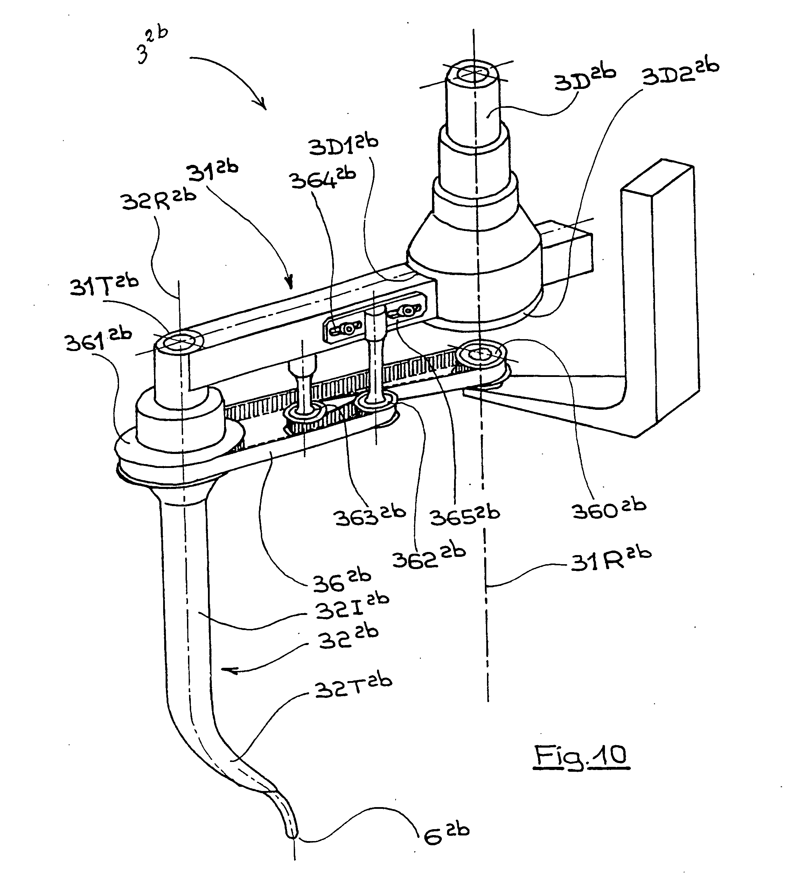

La figure 10 illustre une variante de réalisation du deuxième mode, dans laquelle un agencement à courroie 36^{2b} procure une fonction comparable à la came de l'exemple précédent. On voit un arbre oscillant 3D^{2b} supportant un premier bras 31^{2b}. Le premier bras 31^{2b} comporte une tête 31T^{2b}. Un deuxième bras 32^{2b} est monté rotatif sur la tête 31T^{2b}. La courroie crantée 36^{2b} est montée sur une première poulie 360^{2b} centré sur l'axe géométrique de rotation 31R^{2b} du premier bras. La première poulie 360^{2b} est non mobile en rotation. La courroie crantée 36^{2b} est aussi montée sur une deuxième poulie 361^{2b} centrée sur l'axe géométrique de rotation 32R^{2b} du deuxième bras 32^{2b}. La deuxième poulie 361^{2b} est solidaire dudit deuxième bras.

La courroie 36^{2b} est enroulée également autour d'un galet tendeur 362^{2b} et d'un galet de renvoi 363^{2b}, tous deux fixés au premier bras 31^{2b}. Le premier bras 31^{2b} est monté sur un passage 3D1^{2b} aménagé sur l'arbre 3D^{2b}, et est immobilisé au moyen d'un flasque 3D2^{2b}. On dispose ainsi d'une coulisse permettant de modifier la position relative du premier bras 31^{2b} sur l'arbre 3D^{2b}, afin de pouvoir régler la distance entre les axes géométriques de rotation 31R^{2b} et 32R^{2b}. Afin de pouvoir compenser ces variations de distance alors que la longueur de la courroie 36^{2b} est fixe, le galet tendeur 362^{2b} est montée sur le premier bras 31^{2b} au moyen d'une patte 365^{2b} comportant des lumières 364^{2b}.

Bien entendu, il peut être avantageux de prévoir un tel réglage dans d'autres modes de réalisation. Par exemple, on voit à la figure 7 une lumière 364^{2a} aménagée sur le premier bras 31^{2a}, afin de pouvoir en régler la position relative par rapport à l'arbre 3D^{2a} lors du montage. L'existence d'une possibilité de réglage est la raison pour laquelle la biellette 36^{2a} comporte un manchon de réglage 369^{2a}.

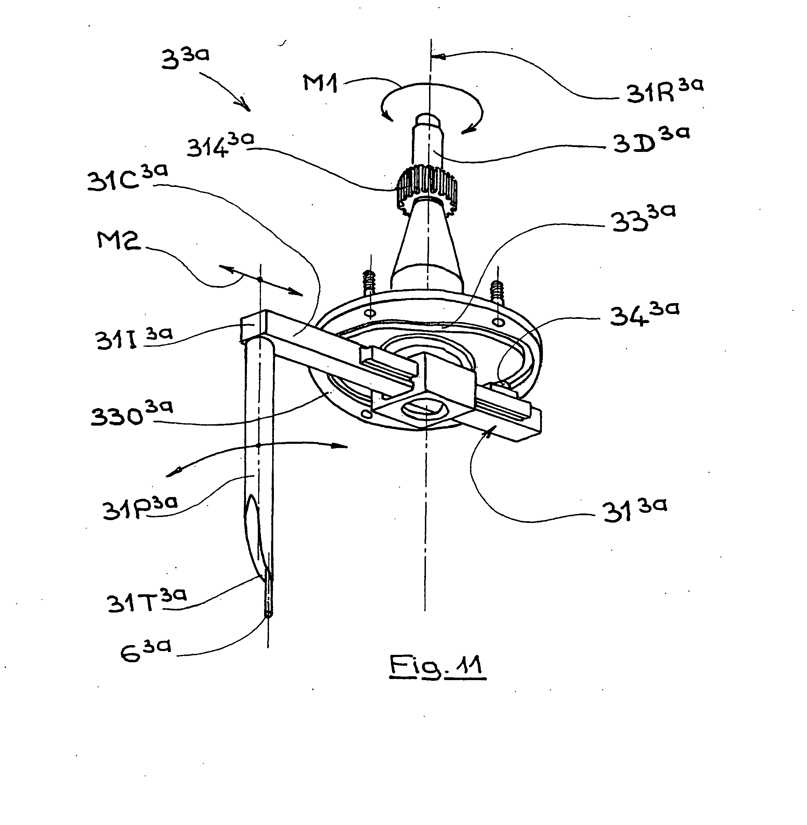

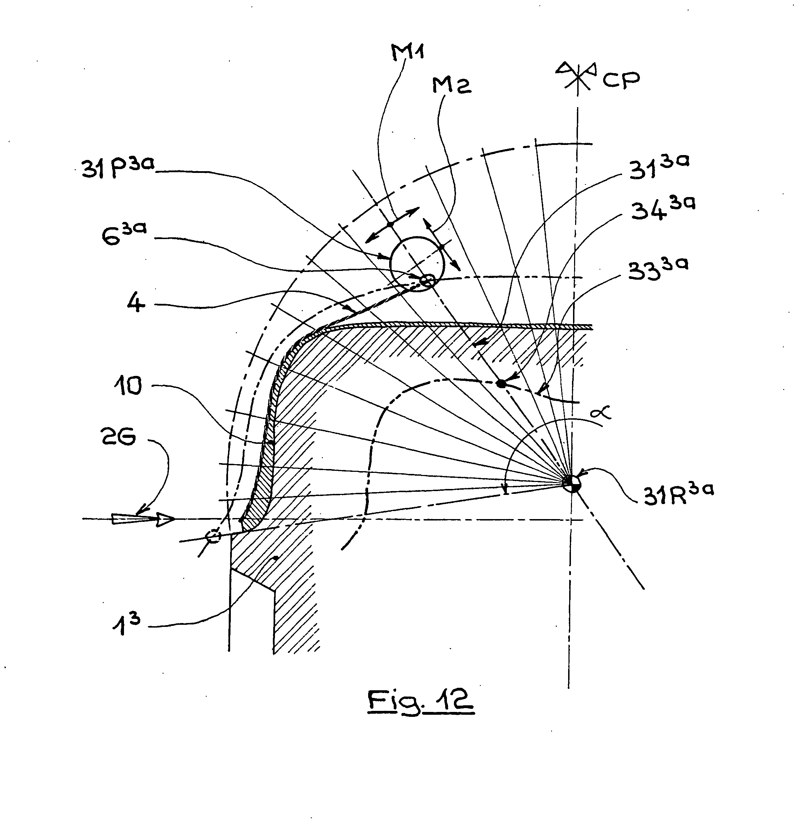

On voit aux figures 11 et 12 un mode de réalisation adapté à la fabrication de pneus pour système PAX. Le noyau 1³ a une forme caractéristique dans la zone des bourrelets. A la figure 11, on a représenté seulement un système à bras oscillant 3^{3a}, sans faire figurer la forme sur laquelle on dépose le fil ou le boîtier qui le supporte. On voit un premier bras 31^{3a}, monté sur un arbre oscillant 3D^{3a} ayant un axe géométrique de rotation 31R^{3a}. Le premier bras 31^{3a} comporte une portion centrale 31C^{3a} coupant l'axe géométrique de rotation 31R^{3a} et sensiblement perpendiculaire à celui-ci. L'appareil comporte une came fixe 33^{3a} creusée dans un disque 330^{3a} centré sur l'axe géométrique de rotation du bras. Un suiveur de came 34^{3a} est en prise avec ladite came. Le suiveur de came 34^{3a} est solidaire de la portion centrale 31C^{3a}, ladite portion centrale 31C^{3a} coulissant radialement par rapport à l'arbre oscillant 3D^{3a}, et donc par rapport à l'axe géométrique de rotation 31R^{3a}. Le mouvement de translation M2 du premier bras 31^{3a} est contrôlé par le suiveur de came 34^{3a}.

L'arbre oscillant 3D^{3a} est solidaire d'un pignon menant 314^{3a}, lui même entraîné alternativement comme expliqué ci-dessus (voir explications pour le pignon menant 314^{1b} de la figure 5) pour conférer le mouvement M1. L'angle α (figure 12) représente la position instantanée du premier bras 31^{3a}. L'angle α varie sur une amplitude suffisante pour que le fil déposé atteigne les zones d'extrémité de trajectoire. Il convient que l'orifice 6 aille au delà de l'endroit où intervient le dispositif presseur 2.

La portion centrale 31C^{3a} rejoint une portion d'extrémité 31T^{3a} sensiblement parallèle audit axe géométrique de rotation 31R^{3a} et supportant l'organe de guidage 6^{3a}. Dans le mode de réalisation illustré, le bras forme une équerre 31I^{3a} entre la portion centrale 31C^{3a} et la portion d'extrémité 31T^{3a}. A l'extrémité de la portion d'extrémité 31T^{3a}, on trouve un orifice 6^{3a}.

Pour réaliser un mouvement symétrique par rapport au plan médian CP, le tracé de la came 33^{3a} est symétrique par rapport au plan CP. L'homme du métier adaptera le tracé de la came au cas d'un pneu dissymétrique.

Parmi les avantages, on peut mentionner que le mouvement du premier bras peut être ajusté aux besoins assez librement puisqu'il dépend essentiellement du profil de la came. On peut s'approcher suffisamment de la surface du noyau 1 dans la zone du bourrelet, sans s'éloigner de la surface du noyau aux alentours du plan CP.

Les exemples précédents illustrent des appareils dans lesquels l'axe géométrique de rotation dudit au moins un bras coupe la forme en position de travail, le ou les bras étant formé(s) et agencé(s) de façon à ce que l'organe de guidage 6 contourne la forme, sans s'en éloigner trop, le mouvement relatif entre organe de guidage et forme déterminant ladite trajectoire souhaitée pour ledit fil à la surface de ladite forme.

Les exemples précédents illustrent des appareils posant des tronçons de fils d'un bourrelet à l'autre bourrelet. On peut aussi réaliser ou utiliser des appareils agissant d'un bourrelet à une épaule, par exemple pour la fabrication d'une demi-carcasse. Il est en effet connu que la carcasse d'un pneumatique radial peut ne pas être continue d'un bourrelet à l'autre, mais peut être interrompue quelque part sous la bande de roulement. Le renfort de carcasse est alors déposé entre le bourrelet et une épaule. Un appareil selon l'invention pourrait tout aussi bien être utilisé pour une action d'un bourrelet jusqu'à n'importe quel point sous la bande de roulement, y compris jusqu'à l'épaule opposée, avec un certain degré de chevauchement des demi-carcasses l'une sur l'autre.

Rappelons que l'orifice 6, dans toutes les variantes, est animé d'un mouvement cyclique dans un plan, appelé ci-dessus « plan de mouvement d'orifice ». Le noyau 1 est entraîné en rotation autour de son axe pendant que l'orifice 6 effectue ses va-et-vient dans le plan de mouvement d'orifice. Bien entendu, le mouvement du noyau 1 est en synchronisme avec le mouvement de va-et-vient de l'orifice. La trajectoire réelle des arceaux 40 du fil 4 est donc à la fois fonction de la position fixe relative (qui peut être inclinée) entre le plan de mouvement d'orifice et le noyau, et est fonction du mouvement relatif entre le noyau 1 et le va-et-vient de l'orifice 6.

Aux exemples décrits, la trajectoire de l'arceau 40 est sensiblement radiale parce qu'on y décrit la réalisation d'une carcasse pour un pneumatique radial, sans que bien entendu cela ne soit limitatif. Le plan de mouvement pourrait aussi former un angle quelconque, par exemple de l'ordre de 20°, par rapport à un plan perpendiculaire à l'axe de rotation du noyau 1, selon les conventions usuelles pour mesurer les angles dans le domaine du pneumatique. Les dispositifs presseurs 2^{G} et 2^{D} agissent dans le même plan de dépose.

Pour réaliser une carcasse croisée dans les flancs, on peut éloigner le plan de mouvement d'orifice d'une orientation purement radiale, par inclinaison du support des organes de pose (comme le boîtier 30) autour d'un axe parallèle à l'axe de rotation du noyau 1. On peut encore, sans rien changer aux organes de l'appareil tel que décrit, changer l'azimut du noyau d'un angle important, par exemple 1/8 de tour pour un va-et-vient du système à bras 3, de sorte que l'on obtient un angle de pose du fil qui est fonction du rapport des déplacements (alors que dans tous les exemples précédents la vitesse du noyau 1 n'agissait que sur le seul pas de pose).

La remarque suivante explique une variante supplémentaire, que l'on peut appliquer à tous les modes de réalisation décrits ici, dans toutes leurs variantes. On peut animer le support des organes de pose (comme le boîtier 30^{1a} - voir figure 1) d'un mouvement alternatif dans le but d'infléchir la trajectoire de pose du fil 4 sur le noyau 1. On peut par exemple animer le support des organes de pose d'un mouvement de translation alternatif (voir double flèche P à la figure 1) permettant de translater le plan de mouvement d'orifice selon une direction perpendiculaire au plan de mouvement. On peut aussi animer le support des organes de pose d'un mouvement d'oscillations autour d'un axe géométrique perpendiculaire à la surface de la forme, compris dans le plan de mouvement et coupant l'axe géométrique de rotation du premier bras (voir double flèche Q autour de l'axe M-M à la figure 1), permettant de faire osciller le plan de mouvement autour d'un axe parallèle audit plan de mouvement. On peut encore animer le support des organes de pose d'un mouvement d'oscillations autour de tout axe parallèle au précédent. Il faut bien distinguer une telle conception d'un simple réglage fixe (également possible et utile dans certains cas) de l'angle que fait le boîtier 30^{1a} autour de l'axe MM. Tous ces modes particuliers de réalisation donnent un degré de liberté supplémentaire pour agir sur la forme exacte de la trajectoire du fil 4.

Signalons encore que, dans le cas de réalisation de demi-carcasses, on peut réaliser simultanément chacune des demi-carcasses de part et d'autre du noyau, en prévoyant deux appareils selon l'invention en regard chacun d'un côté du noyau, les extrémités de la trajectoire étant dans ce cas dans la zone d'un bourrelet d'une part et dans la zone d'une épaule (n'importe laquelle) d'autre part. Ou bien on peut réaliser chacune des demi-carcasses successivement. On peut aussi réaliser des renforcement de sommet, les extrémités de la trajectoires étant dans ce cas toutes deux quelque part sous la bande de roulement, par exemple dans chacune des épaules.

L'ensemble des organes de pose, à savoir le système à bras oscillants 3 et les dispositifs presseurs 2, y compris le moteur et le mécanisme d'entraînement, forme un sous-ensemble pouvant facilement être présenté au noyau de façon appropriée, et pouvant être escamoté pour par exemple présenter au noyau d'autres dispositifs utilisés pour la fabrication d'un pneumatique ou pour l'évacuation du noyau vers d'autres postes de confection d'un pneumatique.

L'invention permet de fabriquer un pneumatique par un procédé dans lequel on fabrique un renforcement à partir d'un fil, délivré en continu et à la demande par un distributeur approprié, en utilisant une forme sensiblement toroïdale sur laquelle on construit progressivement ledit renforcement en déposant des arceaux dudit fil selon une trajectoire souhaitée pour ledit fil à la surface de ladite forme, au moyen de l'un quelconque des appareils décrits, pour appliquer des tronçons de fil d'un des bourrelets du pneumatique à l'autre bourrelet. En particulier, comme illustré, le procédé permet de fabriquer ledit renforcement en déposant côte à côte les arceaux dudit fil à la surface de ladite forme.

## Revendications

1. Appareil de fabrication d'un renforcement pour pneumatique, ledit appareil étant destiné à fabriquer un renforcement constitué à partir d'un fil (4) délivré sensiblement en continu et à la demande par un distributeur approprié, ledit appareil étant destiné à être utilisé en coopération avec une forme (1) sensiblement toroïdale sur laquelle on construit progressivement ledit renforcement en déposant des arceaux dudit fil selon une trajectoire souhaitée pour ledit fil à la surface de ladite forme,
ledit appareil comprenant :
• un organe de guidage (6) dans lequel le fil peut coulisser librement,
• un système à bras oscillant (3^{1a}) ayant au moins un premier bras (31) oscillant autour d'un axe géométrique de rotation (31R^{1a}), ledit bras oscillant comportant une tête (31T) éloignée de son axe géométrique de rotation (31R),
• des moyens de commande pour conférer audit bras oscillant un mouvement d'oscillation autour de son axe géométrique de rotation (31R^{1a}), l'appareil étant agencé pour que la tête dudit premier bras oscillant transporte l'organe de guidage (6) directement, ou indirectement par l'intermédiaire d'un ou plusieurs autres bras,
ledit appareil étant destiné à être utilisé en coopération avec des presseurs (2G et 2D) proches de chaque extrémité de ladite trajectoire, pour appliquer le fil sur la forme auxdites extrémités,
**caractérisé en ce que**
l'axe géométrique de rotation dudit premier bras (31) coupe la forme (1) en position de travail, et la distance radiale entre l'organe de guidage (6) et l'axe géométrique de rotation (31 R) du bras est variable.

2. Appareil selon la revendication 1, dans lequel le système à bras oscillants (3^{1a}) comporte un deuxième bras (32) oscillant autour d'un axe géométrique de rotation (32R), lesdits axes géométriques de rotation étant sensiblement parallèles, ledit deuxième bras comportant une tête (32T) transportant l'organe de guidage directement, ou indirectement par l'intermédiaire d'un ou plusieurs autres bras, la tête (31T) du premier bras (31) supportant l'axe géométrique de rotation (32R) du deuxième bras (32).

3. Appareil selon la revendication 2 dans lequel la tête (32T) du deuxième bras (32) est radialement éloignée de l'axe géométrique de rotation du deuxième bras (32R).

4. Appareil selon la revendication 2 ou 3, comportant des moyens de commande de la position relative du deuxième bras par rapport audit premier bras de sorte que l'organe de guidage est transporté selon un mouvement cyclique pour amener l'organe de guidage en cycles successifs au voisinage de chacune des extrémités souhaitées pour le fil dans ladite trajectoire.

5. Appareil selon l'une des revendications 2 à 4, dans lequel la tête (32T) du deuxième bras est recourbée vers ladite forme, et supporte directement l'organe de guidage (6), de façon à rapprocher l'organe de guidage de ladite forme au moins dans la configuration prise par l'appareil lorsque l'organe de guidage est proche de l'extrémité de ladite trajectoire.

6. Appareil selon l'une des revendications 2 à 4, dans lequel ledit premier bras (31) est sensiblement orienté perpendiculairement à son axe géométrique de rotation, le deuxième bras (32) ayant au moins une partie intermédiaire (32I) orientée sensiblement parallèlement à l'axe géométrique de rotation du premier bras.

7. Appareil selon l'une des revendications 2 à 6, dans lequel la base (320) du deuxième bras, incluant l'axe géométrique de rotation, est orientée sensiblement perpendiculairement à l'axe géométrique de rotation.

8. Appareil selon la revendication 7, dans lequel le premier bras supporte une cascade de pignons ayant un premier pignon fixe (311¹) centré sur l'axe géométrique de rotation du premier bras, et un pignon d'extrémité (313¹) centré sur l'axe géométrique de rotation du deuxième bras et solidaire de celui-ci, et un pignon intermédiaire (312¹) engrenant avec le premier pignon et le pignon d'extrémité.

9. Appareil selon la revendication 8, dans lequel le nombre de dents N_{f} du pignon fixe (311^{1a}) est inférieur au nombre de dents Nₑ du pignon d'extrémité(313^{1a}), avec N_{f}= a Nₑ, le premier bras décrivant des oscillations d'amplitude α, α étant positif dans le sens trigonométrique inverse, le deuxième bras décrivant des oscillations d'amplitude β = 180°-aα autour de ladite forme, β étant positif dans le sens trigonométrique.

10. Appareil selon la revendication 8, dans lequel le nombre de dents N_{f} du pignon fixe (311^{1b}) est supérieur au nombre de dents Nₑ du pignon d'extrémité(313^{1b}), avec N_{f}= a Nₑ, le premier bras décrivant des oscillations d'amplitude α dans l'espace du côté de son axe géométrique de rotation opposé à la forme, le deuxième bras décrivant des oscillations d'amplitude β = aα autour de ladite forme, α étant positif dans le sens trigonométrique inverse, β étant positif dans le sens trigonométrique.

11. Appareil selon la revendication 7, dans lequel le premier bras (31^{2b}) supporte une courroie crantée (36^{2b}) montée sur une première poulie (360^{2b}) centrée sur l'axe géométrique de rotation du premier bras, non mobile en rotation, et sur une deuxième poulie (361^{2b}) centrée sur l'axe géométrique de rotation du deuxième bras (32^{2b}) et solidaire dudit deuxième bras.

12. Appareil selon l'une des revendications 2 à 7, comportant une came fixe (33^{2a}) centrée sur l'axe géométrique de rotation du premier bras, dans lequel le premier bras supporte un suiveur de came (34^{2a}) en prise avec ladite came, le premier bras comportant un patin (35^{2a}) dont le mouvement est commandé par le suiveur de came, le deuxième bras comportant un levier (312^{2a}) sensiblement perpendiculaire à son axe géométrique de rotation, l'extrémité dudit levier étant reliée par une biellette (36^{2a}) au patin.

13. Appareil selon l'une des revendications 2 à 12, dans lequel la tête du deuxième bras oscillant transporte directement l'organe de guidage.

14. Appareil selon la revendication 1 dans lequel ledit au moins un bras (31^{3a}) comporte une portion centrale (31C^{3a}) coupant l'axe géométrique de rotation (31R^{3a}) et sensiblement perpendiculaire à celui-ci, et rejoignant une portion d'extrémité (31T^{3a}) sensiblement parallèle audit axe géométrique de rotation (31R^{3a}) et supportant l'organe de guidage (6^{3a}), ladite portion centrale (31C^{3a}) coulissant radialement par rapport à l'axe géométrique de rotation (31R^{3a}).

15. Appareil selon la revendication 14, comportant une came fixe (33^{3a}) et un suiveur de came (34^{3a}) en prise avec ladite came et solidaire de la portion centrale (3 1C^{3a}), le mouvement de translation du bras (31^{3a}) étant contrôlé par le suiveur de came (34^{3a}).

16. Appareil selon l'une des revendications 1 à 15, dans le ou les bras sont formé(s) et agencé(s) de façon à ce que l'organe de guidage (6) contourne la forme, le mouvement de l'organe de guidage étant sensiblement compris dans un plan dit plan-de-mouvement, ledit plan de mouvement étant perpendiculaire à l'axe géométrique de rotation du premier bras, le mouvement relatif entre organe de guidage et forme déterminant ladite trajectoire souhaitée pour ledit fil à la surface de ladite forme.

17. Appareil selon l'une des revendications 1 à 16, dans lequel l'organe de guidage est constitué par un orifice à l'extrémité du deuxième bras oscillant, ledit deuxième bras étant creux et parcouru par ledit fil.

18. Appareil selon l'une des revendications 1 à 17, dans lequel lesdits moyens de commande du bras oscillant transporte l'organe de guidage (6) selon un mouvement cyclique décrit dans un plan de mouvement, pour amener l'organe de guidage en cycles successifs au voisinage de chacune des extrémités souhaitées pour le fil dans ladite trajectoire.

19. Procédé de fabrication d'un pneumatique, dans lequel on fabrique un renforcement à partir d'un fil délivré sensiblement en continu et à la demande par un distributeur approprié, utilisant une forme sensiblement toroïdale sur laquelle on construit progressivement ledit renforcement en déposant des arceaux dudit fil selon une trajectoire souhaitée pour ledit fil à la surface de ladite forme, au moyen d'un appareil selon l'une des revendications 1 à 11 et selon un mouvement cyclique décrit dans un plan de mouvement, pour amener l'organe de guidage en cycles successifs au voisinage de chacune des extrémités souhaitées pour le fil dans ladite trajectoire, ledit appareil comportant en outre des presseurs (2G et 2D) proches de chaque extrémité de ladite trajectoire, pour appliquer le fil sur la forme auxdites extrémités, en agissant en synchronisme avec ledit mouvement cyclique de l'organe de guidage, appliquant des tronçons de fil d'un des bourrelets du pneumatique à l'autre bourrelet.

20. Procédé de fabrication d'un pneumatique selon la revendication 19, dans lequel on fabrique ledit renforcement en déposant côte à côte les arceaux dudit fil à la surface de ladite forme.

## Patentansprüche

1. Vorrichtung zur Herstellung einer Verstärkung für Luftreifen, wobei die Vorrichtung dazu bestimmt ist, eine Verstärkung herzustellen, die aus einem Draht (4) besteht, der im Wesentlichen kontinuierlich und nach Bedarf durch eine geeignete Abgabeeinrichtung zugeführt wird, wobei die Vorrichtung für einen Einsatz zusammen mit einer im Wesentlichen ringförmigen Form (1) vorgesehen ist, auf der die Verstärkung schrittweise aufgebaut wird, indem Bögen des Drahts gemäß einer für den Draht gewünschten Bahn auf der Oberfläche der Form abgelegt werden,
wobei die Vorrichtung umfasst:
• ein Führungselement (6), in dem der Draht frei gleiten kann,
• ein System mit Schwingarm (3^{1a}), das mindestens einen ersten Arm (31) aufweist, der um eine geometrische Drehachse (31R^{1a}) schwingt, wobei der Schwingarm einen Kopf (31T) besitzt, der von seiner geometrischen Drehachse (31R) beabstandet ist, und
• Steuereinrichtungen, um den Schwingarm in eine schwingende Bewegung um seine geometrische Drehachse (31R^{1a}) zu versetzen, wobei die Vorrichtung so aufgebaut ist, dass der Kopf des ersten Schwingarms das Führungselement (6) direkt oder indirekt über einen oder mehrere weitere Arme bewegt,
und wobei die Vorrichtung für einen Einsatz zusammen mit Andrückeinrichtungen (2G und 2D) vorgesehen ist, die sich jeweils nahe bei den Enden der Bahn befinden, um den Draht an diesen Enden auf die Form aufzubringen,
**dadurch gekennzeichnet, dass**
die geometrische Drehachse des ersten Arms (31) die Form (1) in Betriebsposition schneidet und der radiale Abstand zwischen dem Führungselement (6) und der geometrischen Drehachse (31R) des Arms veränderlich ist.

2. Vorrichtung nach Anspruch 1, worin das System mit Schwingarmen (3^{1a}) einen zweiten Arm (32) umfasst, der um eine geometrische Drehachse (32R) schwingt, wobei die geometrischen Drehachsen im Wesentlichen zueinander parallel sind, wobei der zweite Arm einen Kopf (32T) aufweist, der das Führungselement direkt oder indirekt über einen oder mehrere weitere Arme bewegt, und wobei der Kopf (31T) des ersten Arms (31) die geometrische Drehachse (32R) des zweiten Arms (32) trägt.

3. Vorrichtung nach Anspruch 2, worin der Kopf (32T) des zweiten Arms (32) in radialer Richtung von der geometrischen Drehachse (32R) des zweiten Arms abgerückt ist.

4. Vorrichtung nach Anspruch 2 oder 3, die Einrichtungen zur Steuerung der relativen Position des zweiten Arms im Verhältnis zu der Position des ersten Arms enthält, die so sind, dass das Führungselement gemäß einer zyklischen Bewegung bewegt wird, um das Führungselement in aufeinander folgenden Zyklen jeweils in die Nähe der Enden zu bringen, die für den Draht in der Bahn vorgesehen sind.

5. Vorrichtung nach einem der Ansprüche 2 bis 4, worin der Kopf (32T) des zweiten Arms zu der Form hin gebogen ist und direkt das Führungselement (6) trägt, um das Führungselement zumindest in der Konfiguration, die von der Vorrichtung eingenommen wird, wenn sich das Führungselement in der Nähe des Endes des Bahn befindet, an die Form anzunähern.

6. Vorrichtung nach einem der Ansprüche 2 bis 4, worin der erste Arm (31) im Wesentlichen senkrecht zu seiner geometrischen Drehachse ausgerichtet ist, wobei der zweite Arm (32) mindestens ein Zwischenstück (321) aufweist, das im Wesentlichen parallel zu der geometrischen Drehachse des ersten Arms ausgerichtet ist.

7. Vorrichtung nach einem der Ansprüche 2 bis 6, worin die Basis (320) des zweiten Arms, die die geometrische Drehachse mit einschließt, im Wesentlichen senkrecht zu der geometrischen Drehachse ausgerichtet ist.

8. Vorrichtung nach Anspruch 7, worin der erste Arm eine Reihe von Zahnrädern trägt, mit einem ersten feststehenden Zahnrad (311¹), das um die geometrische Drehachse des ersten Arms angeordnet ist, einem endständigen Zahnrad (313¹), das um die geometrische Drehachse des zweiten Arms angeordnet und fest mit diesem verbunden ist, und einem dazwischen befindlichen Zahnrad (312¹), das mit dem ersten Zahnrad und mit dem endständigen Zahnrad in Eingriff ist.

9. Vorrichtung nach Anspruch 8, worin die Zähnezahl N_{f} des feststehenden Zahnrads (311^{1a}) kleiner ist als die Zähnezahl Nₑ des endständigen Zahnrads (313^{1a}), mit N_{f} = a Nₑ, wobei der erste Arm Schwingungen mit einer Amplitude α beschreibt, wobei α in invers trigonometrischer Richtung positiv ist, und der zweite Arm Schwingungen mit einer Amplitude β = 180° - aα um die Form herum beschreibt, wobei β in trigonometrischer Richtung positiv ist.

10. Vorrichtung nach Anspruch 8, worin die Zähnezahl N_{f} des feststehenden Zahnrads (311^{1b}) größer ist als die Zähnezahl Nₑ des endständigen Zahnrads (313^{1b}), mit N_{f} = a Nₑ, wobei der erste Arm in dem Raum auf der Seite seiner geometrischen Drehachse, die der Form gegenüber liegt, Schwingungen mit einer Amplitude α beschreibt, und der zweite Arm Schwingungen mit einer Amplitude β = aα um die Form herum beschreibt,
wobei α in invers trigonometrischer Richtung positiv ist und β in trigonometrischer Richtung positiv ist.

11. Vorrichtung nach Anspruch 7, worin der erste Arm (31^{2b}) einen Zahnriemen (36^{2b}) trägt, der auf einer ersten Rolle (360^{2b}), die um die geometrische Drehachse des ersten Arms angeordnet ist und die nicht drehbar ist, und auf einer zweiten Rolle (361^{2b}) montiert ist, die um die geometrische Drehachse des zweiten Arms (32^{2b}) angeordnet ist und die fest mit diesem zweiten Arm verbunden ist.

12. Vorrichtung nach einem der Ansprüche 2 bis 7, die eine feststehende Kurve (33^{2a}) umfasst, die um die geometrische Drehachse des ersten Arms angeordnet ist, wobei der erste Arm eine Kurvenrolle (34^{2a}) trägt, die mit der Kurve in Eingriff ist, der erste Arm einen Schlitten (35^{2a}) aufweist, dessen Bewegung durch die Kurvenrolle gesteuert wird, der zweite Arm eine Nase (312^{2a}) besitzt, die im Wesentlichen senkrecht zu seiner geometrischen Drehachse ausgerichtet ist, und das Ende der Nase durch eine Schubstange (36^{2a}) mit dem Schlitten verbunden ist.

13. Vorrichtung nach einem der Ansprüche 2 bis 12, worin der Kopf des zweiten Schwingarms direkt das Führungselement bewegt.

14. Vorrichtung nach Anspruch 1, worin der zumindest eine Arm (31^{3a}) ein zentrales Stück (31C^{3a})aufweist, das die geometrische Drehachse (31R^{3a}) schneidet und im Wesentlichen senkrecht zu dieser ausgerichtet ist und das mit einem Endstück (31T^{3a}) zusammengefügt ist, das im Wesentlichen parallel zu der geometrischen Drehachse (31R^{3a}) ausgerichtet ist und das Führungselement (6^{3a}) trägt, wobei das zentrale Stück (31C^{3a}) bezogen auf die geometrische Drehachse (31R^{3a}) in radialer Richtung verschiebbar ist.

15. Vorrichtung nach Anspruch 14, die eine feststehende Kurve (33^{3a}) und einen Kurvenroller (34^{3a}), der mit der Kurve in Eingriff ist und der fest mit dem zentralen Stück (31C^{3a}) verbunden ist, umfasst, wobei die Translationsbewegung des Arms (31^{3a}) durch den Kurvenroller (34^{3a}) gesteuert wird.

16. Vorrichtung nach einem der Ansprüche 1 bis 15, worin der oder die Arme so ausgebildet und angeordnet ist (sind), dass das Führungselement (6) um die Form herum läuft, wobei die Bewegung des Führungselements im Wesentlichen in einer als Bewegungsebene bezeichneten Ebene abläuft, wobei die Bewegungsebene senkrecht zu der geometrischen Drehachse des ersten Arms ausgerichtet ist und wobei die relative Bewegung des Führungselements im Verhältnis zu der Bewegung der Form die Bahn bestimmt, der der Draht auf der Oberfläche der Form folgen soll.

17. Vorrichtung nach einem der Ansprüche 1 bis 16, worin das Führungselement von einer Öffnung am Ende des zweiten Schwingarms gebildet wird, wobei der zweite Arm hohl ist und der Draht durch ihn hindurch läuft.

18. Vorrichtung nach einem der Ansprüche 1 bis 17, worin die Einrichtungen zur Steuerung des Schwingarms das Führungselement (6) gemäß einer in einer Bewegungsebene beschriebenen zyklischen Bewegung transportieren, damit das Führungselement in aufeinander folgenden Zyklen jeweils in die Nähe der Enden gebracht wird, die für den Draht in der Bahn gewünscht sind.

19. Verfahren zur Fertigung eines Luftreifens, worin eine Verstärkung aus einem Draht hergestellt wird, der im Wesentlichen kontinuierlich und nach Bedarf durch eine geeignete Abgabeeinrichtung zugeführt wird, wobei eine im Wesentlichen ringförmige Form zum Einsatz kommt, auf der die Verstärkung schrittweise aufgebaut wird, indem Bögen des Drahts gemäß einer Bahn, der der Draht folgen soll, mit Hilfe einer Vorrichtung nach einem der Ansprüche 1 bis 11 und gemäß einer in einer Bewegungsebene beschriebenen zyklischen Bewegung, um das Führungselement in aufeinander folgenden Zyklen jeweils in die Nähe der für den Draht in der Bahn gewünschten Enden zu bringen, auf der Oberfläche der Form abgelegt werden, wobei die Vorrichtung ferner Andrückeinrichtungen (2G und 2D) umfasst, die sich jeweils in der Nähe der Enden der Bahn befinden, um den Draht an diesen Enden auf die Form aufzubringen, wobei im Gleichlauf mit der zyklischen Bewegung des Führungselements gearbeitet wird und Drahtstücke von einem der Wülste des Luftreifens zu dem anderen Wulst aufgebracht werden.

20. Verfahren zur Fertigung eines Luftreifens nach Anspruch 19, worin die Verstärkung hergestellt wird, indem die Bögen des

## Claims

1. Apparatus for producing a tyre reinforcement, the said apparatus being intended to produce a reinforcement formed from a cord (4) delivered substantially continuously and on request by an appropriate dispenser, the said apparatus being intended to be used in cooperation with a substantially toroidal form (1) on which the said reinforcement is progressively constructed by laying hoops of the said cord on a desired path for the said cord on the surface of the said form,
the said apparatus comprising:
• a guiding member (6) in which the cord can slide freely,
• an oscillating-arm system (3^{1a}) having at least one first arm (31) oscillating about a geometrical axis of rotation (31R^{1a}), the said oscillating arm comprising a head (31T) remote from its geometrical axis of rotation (31R),
• control means for imparting to the said oscillating arm an oscillatory movement about its geometrical axis of rotation (31R^{1a}), the apparatus being arranged so that the head of the said first oscillating arm transports the guiding member (6) directly, or indirectly via one or more other arms,
the said apparatus being intended to be used in cooperation with pressers (2G and 2D) close to each end of the said path, for applying the cord to the form at the said ends,
**characterised in that**
the geometrical axis of rotation of the said first arm (31) intersects the form (1) in the working position, and the radial distance between the guiding member (6) and the geometrical axis of rotation (31R) of the arm is variable.

2. Apparatus according to Claim 1, in which the oscillating-arm system (3^{1a}) comprises a second arm (32) oscillating about a geometrical axis of rotation (32R), the said geometrical axes of rotation being substantially parallel, the said second arm comprising a head (32T) transporting the guiding member directly, or indirectly via one or more other arms, the head (31T) of the first arm (31) supporting the geometrical axis of rotation (32R) of the second arm (32).

3. Apparatus according to Claim 2 in which the head (32T) of the second arm (32) is radially remote from the geometrical axis of rotation of the second arm (32R).

4. Apparatus according to Claim 2 or 3, comprising means for controlling the relative position of the second arm with respect to the said first arm so that the guiding member is transported in a cyclical movement in order to bring the guiding member in successive cycles into the vicinity of each of the desired ends for the cord in the said path.

5. Apparatus according to one of Claims 2 to 4, in which the head (32T) of the second arm is curved towards the said form, and directly supports the guiding member (6), so as to bring the guiding member close to the said form at least in the configuration assumed by the apparatus when the guiding member is close to the end of the said path.

6. Apparatus according to one of Claims 2 to 4, in which the said first arm (31) is substantially oriented perpendicularly to its geometrical axis of rotation, the second arm (32) having at least one intermediate part (321) oriented substantially parallel to the geometrical axis of rotation of the first arm.

7. Apparatus according to one of Claims 2 to 6, in which the base (320) of the second arm, including the geometrical axis of rotation, is oriented substantially perpendicularly to the geometrical axis of rotation.

8. Apparatus according to Claim 7, in which the first arm supports a succession of pinions having a first fixed pinion (311¹) centred on the geometrical axis of rotation of the first arm, and an end pinion (313¹) centred on the geometrical axis of rotation of the second arm and integral with the latter, and an intermediate pinion (312¹) meshing with the first pinion and the end pinion.

9. Apparatus according to Claim 8, in which the number of teeth N_{f} of the fixed pinion (311^{1a}) is less than the number of teeth Nₑ of the end pinion (313^{1a}), where N_{f}= a Nₑ, the first arm describing oscillations of extent α, α being negative in the trigonometric sense, the second arm describing oscillations of extent β = 180°-aα about the said form, β being positive in the trigonometric sense.

10. Apparatus according to Claim 8, in which the number of teeth N_{f} of the fixed pinion (311^{1b}) is greater than the number of teeth Nₑ of the end pinion (313^{1b}), where N_{f}= a Nₑ, the first arm describing oscillations of extent α in the space on the side of its geometrical axis of rotation opposite the form, the second arm describing oscillations of extent β = aα about the said form, α being negative in the trigonometric sense, β being positive in the trigonometric sense.

11. Apparatus according to Claim 7, in which the first arm (31^{2b}) supports a notched belt (36^{2b}) mounted on a first pulley (360^{2b}) centred on the geometrical axis of rotation of the first arm, not rotationally movable, and on a second pulley (361^{2b}) centred on the geometrical axis of rotation of the second arm (32^{2b}) and integral with the said second arm.

12. Apparatus according to one of Claims 2 to 7, comprising a fixed cam (33^{2a}) centred on the geometrical axis of rotation of the first arm, in which the first arm supports a cam follower (34^{2a}) in engagement with the said cam, the first arm comprising a shoe (35^{2a}), the movement of which is controlled by the cam follower, the second arm comprising a lever (312^{2a}) substantially perpendicular to its geometrical axis of rotation, the end of the said lever being connected to the shoe by a link (36^{2a}).

13. Apparatus according to one of Claims 2 to 12, in which the head of the second oscillating arm directly transports the guiding member.

14. Apparatus according to Claim 1, in which the said at least one arm (31^{3a}) comprises a central portion (31C^{3a}) intersecting the geometrical axis of rotation (31R^{3a}) and substantially perpendicular thereto, and joining an end portion (31T^{3a}) substantially parallel to the said geometrical axis of rotation (31R^{3a}) and supporting the guiding member (6^{3a}), the said central portion (31C^{3a}) sliding radially with respect to the geometrical axis of rotation (31R^{3a}).

15. Apparatus according to Claim 14, comprising a fixed cam (33^{3a}) and a cam follower (34^{3a}) in engagement with the said cam and integral with the central portion (31C^{3a}), the translational movement of the arm (31^{3a}) being controlled by the cam follower (34^{3a}).

16. Apparatus according to one of Claims 1 to 15, in [which] the arm(s) is/are formed and arranged so that the guiding member (6) skirts round the form, the movement of the guiding member being substantially contained in one plane, the movement plane, the said movement plane being perpendicular to the geometrical axis of rotation of the first arm, the relative movement between guiding member and form determining the said desired path for the said cord on the surface of the said form.

17. Apparatus according to one of Claims 1 to 16, in which the guiding member consists of an orifice at the end of the second oscillating arm, the said second arm being hollow and having the said cord passing though it.

18. Apparatus according to one of Claims 1 to 17, in which the said means for controlling the oscillating arm transports the guiding member (6) in a cyclical movement described in one movement plane, in order to bring the guiding member in successive cycles into the vicinity of each of the desired ends for the cord in the said path.

19. Method for producing a tyre, in which a reinforcement is produced from a cord delivered substantially continuously and on request by an appropriate dispenser, using a substantially toroidal form on which the said reinforcement is progressively constructed by laying hoops of the said cord on a desired path for the said cord on the surface of the said form, by means of an apparatus according to one of Claims 1 to 11 and in a cyclical movement described in one movement plane, in order to bring the guiding member in successive cycles into the vicinity of each of the desired ends for the cord in the said path, the said apparatus further comprising pressers (2G and 2D) close to each end of the said path, for applying the cord to the form at the said ends, by acting in synchronism with the said cyclical movement of the guiding member, applying lengths of cord from one of the beads of the tyre to the other bead.

20. Method for producing a tyre according to Claim 19, in which the said reinforcement is produced by laying the hoops of the said cord side by side on the surface of the said form.
